Europäisches Patentamt

European Patent Office

Office européen des brevets

(19)

(11) Numéro de publication : **0 353 193 B1**

(12)
# FASCICULE DE BREVET EUROPEEN

(45) Date de publication du fascicule du brevet :
**23.09.92 Bulletin 92/39**

(51) Int. Cl.⁵ : **B32B 27/34,** B32B 27/32,
B65D 65/40, A61J 1/00

(21) Numéro de dépôt : **89810557.2**

(22) Date de dépôt : **21.07.89**

(54) **Sachet souple étanche, fait d'un matériau multicouche en feuille, et son procédéde fabrication.**

Le dossier contient des informations
techniques présentées postérieurement au
dépôt de la demande et ne figurant pas dans
leprésent fascicule.

(30) Priorité : **29.07.88 CH 2898/88**

(43) Date de publication de la demande :
**31.01.90 Bulletin 90/05**

(45) Mention de la délivrance du brevet :
**23.09.92 Bulletin 92/39**

(84) Etats contractants désignés :
**AT BE CH DE ES FR GB GR IT LI LU NL SE**

(56) Documents cités :
**EP-A- 0 228 819
DE-A- 2 236 375
US-A- 4 668 571**

(73) Titulaire : **Vifor Medical AG
Rüeggisingerstrasse 29
CH-6020 Emmenbrücke (CH)**

(72) Inventeur : **Loretti, Maurice
7 Chemin du Coin de Terre
CH-1219 Chatelaine/GE (CH)**
Inventeur : **Vanat, Pierre
37 Rue de la Terrassière
CH-1207 Geneve (CH)**

(74) Mandataire : **Kirker, Gaylord Emile et al
c/o KIRKER & Cie S.A. 14, Rue du Mont-Blanc
Case postale 1736
CH-1211 Genève 1 (CH)**

EP 0 353 193 B1

EP 0 353 193 B1

## Description

L'invention a pour objet un sachet souple étanche à usage médical pour solutions stériles, en particulier un sachet souple pour perfusions, caractérisé en ce qu'il est fait de deux feuilles soudées de matériau multicouche en feuille comprenant un film de polyamide de l'acide 11-amino-undécanoïque lié par l'une au moins de ses faces à un film de polypropylène au moyen d'un film de polyoléfine, les films de polypropylène formant la paroi interne du sachet souple étanche.

L'invention a aussi pour objet un procédé de fabrication dudit sachet souple étanche, caractérisé en ce qu'on commence par fabriquer un matériau multicouche en feuille par coextrusion de polyamide de l'acide 11-amino-undécanoïque, du liant polyoléfinique et de polypropylène puis on dispose deux feuilles du matériau-multicouche l'une contre l'autre, les deux feuilles étant en contact par leur film de polypropylène, et on effectue la soudure au niveau des deux films de polypropylène ainsi assemblés.

Dans l'industrie pharmaceutique et plus particulièrement dans le domaine des solutions pour perfusions, on utilise abondamment des sachets souples étanches. De tels sachets sont réalisés à base de matières polymérisées répondant à des conditions fort diverses : étanchéité aux gaz et aux vapeurs, transparence, inertie vis-à-vis des substances contenues, pour l'essentiel des solutions aqueuses de sels, glucides, acides aminés ou autres, stabilité thermique permettant de supporter une stérilisation à chaud, soudabilité entre autres. La matière la plus répandue en ce domaine est le chlorure de polyvinyle (PVC) qui répond à l'essentiel des conditions précitées : cependant, le PVC est une source de pollution car sa combustion provoque un dégagement de substances chlorées qui n'est plus admissible. De plus, la stabilité du PVC n'est pas absolue, face à certains solutés notamment.

Pour des motifs touchant en premier lieu la protection de l'environnement, l'industrie est de ce fait confrontée à la nécessité de trouver des matériaux de remplacement du PVC, de préférence des matériaux polymérisés simples ou complexes réunissant toutes les qualités inhérentes au PVC sans être pour autant source de pollution. L'invention a précisément pour but de proposer un sachet souple étanche en un nouveau matériau polymérisé permettant de résoudre avantageusement le problème posé par le remplacement du PVC, notamment pour ce qui concerne le domaine des sachets souples étanches pour solutions stériles.

Il est en effet très rare de trouver un matériau polymérisé simple (homo- ou co-polymère) possédant à lui seul toutes les caractéristiques requises et qui soit en outre commercialement attractif. La recherche s'est orientée de ce fait vers l'élaboration de matériaux complexes, dits multicouches, au sein desquels on s'efforce d'associer les propriétés intrinsèques de chaque constituant pour obtenir le résultat souhaité. La tâche n'est pas aisée car nombre de conditions sont à remplir (soudabilité, stabilité, souplesse, étanchéité, ...) et il faut en plus que lesdits constituants soient compatibles entre eux. Le matériau multicouche du sachet souple tel que défini à la revendication 1 répond à toutes ces conditions.

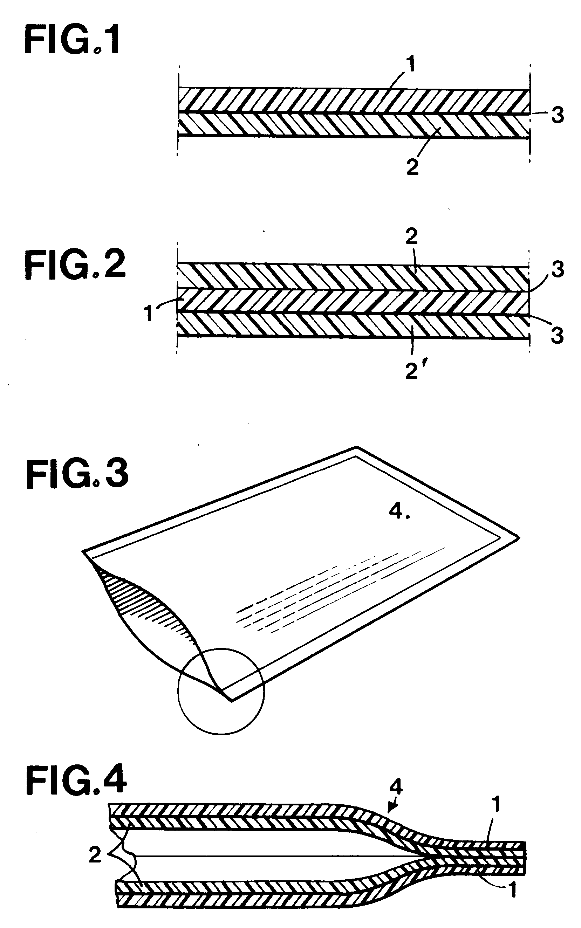

Le dessin annexé illustre la présente invention sans pour autant la limiter. Plus particulièrement, Fig. 1 représente, vue en coupe, une première exécution du matériau constituant le sachet souple selon l'invention. Fig. 2 représente vue en coupe, une seconde exécution du matériau constituant le sachet souple selon l'invention. Fig. 3 représente, l'une des mises en oeuvre du matériau constituant le sachet souple selon l'invention. Fig. 4 représente, vu en coupe, un détail de la Fig. 3.

L'invention consiste en un sachet souple étanche à usage médical pour solutions stériles, en particulier un sachet souple pour perfusions, fait de deux feuilles soudées de matériau multicouche en feuille comprenant un film de polyamide de l'acide 11-amino-undécanoïque 1 lié par l'une au moins de ses faces à un film de polypropylène 2 au moyen d'un film de polyoléfine 3, les films de polypropylène 2 formant la paroi interne du sachet souple étanche.

Dans une exécution particulière, le sachet selon l'invention est en matériau comprenant par conséquent un film de polyamide 1 lié par chacune de des faces à un film de polypropylène 2,2′.

Dans une exécution préférentielle, le sachet selon l'invention est en matériau se composant d'un film de polyamide de l'acide 11-amino-undécanoïque 1 comportant, lié à l'une de ses faces, un film de polypropylène 2, comme illustré par Fig. 1.

Dans une variante de cette exécution préférentielle, ledit matériau se compose d'un film de polyamide 1 comportant, sur chacune de ses faces, un film de polypropylène 2, 2′, comme illustré par Fig. 2.

Dans chacune des exécutions de l'invention, en particulier celles mentionnées ci-dessus, le film de polyamide 1, respectivement de polypropylène 2, est un film simple ou un film double.

On peut en outre concevoir, dans une exécution non représentée, un matériau analogue à celui illustré par Fig. 2, mais dans lequel l'un des films de polypropylène 2, 2′ est remplacé par un film d'une autre polyoléfine, le polyéthylène par exemple.

Comme indiqué ci-dessus, les films 1 et 2, respectivement 2′, sont liés l'un à l'autre de sorte qu'ils forment un ensemble cohérent, mécaniquement indissociable. Le liant utilisé à de telles fins consiste en un film de po-

2

lyoléfine 3 que l'on dispose entre les films 1 et 2 au cours du processus de fabrication qui sera décrit plus loin. Par l'emploi de polyoléfine, on crée des interactions chimiques particulièrement stables avec la matière polymérisée des films 1 et 2 sans nuire pour autant aux propriétés de chacun de ces films.

Le polyamide de l'acide 11-amino-undécanoïque (PA 11 en termes techniques) est un matériau connu, accessible sur le marché, remarquablement imperméable aux gaz tels que $O_2$, $N_2$ et $CO_2$. C'est en outre un matériau que l'on peut facilement extruder et qui se révèle extrêmement stable à l'usage, contrairement au cas d'autres polyamides tel le polyamide du caprolactame (PA 6) qui libère au cours du temps une portion relativement importante de son monomère, le caprolactame, et qui de ce fait se révèle impropre à de nombreux usages.

En outre, le PA 11 s'avère nettement plus inerte vis-à-vis de l'eau que le PA 6 d'où, dans des conditions identiques, une très nette supériorité de ses propriétés mécaniques (par exemple résistance au "stress-crakking"). Le PA 11 possède un domaine de fusion compris entre 178 et 194°C et supporte sans autre inconvénient les températures usuelles de stérilisation, 110°C et plus.

Le polypropylène (en termes techniques PP) constituant le film 2, 2' est un matériau connu et apprécié dans de nombreux domaines. Pour le sachet de l'invention, on peut aussi bien utiliser un homopolypropylène (point de fusion de l'ordre de 158°C) qu'un copolymère de propylène et d'éthylène, par exemple un copolymère de propylène contenant environ 2% d'éthylène (point de fusion de l'ordre de 152°C). En variant de la sorte la qualité du polypropylène, on obtient un matériau plus ou moins fusible s'adaptant avantageusement aux techniques de soudage. Le polypropylène, en outre, est imperméable aux vapeurs d'eau et cette qualité vient avantageusement se combiner à celles du polyamide PA 11.

Le matériau multicouche du sachet selon l'invention combine de ce fait de très nombreux avantages lorsqu'on le compare à des matériaux complexes analogues :

– il peut être obtenu par coextrusion, un procédé de fabrication plus avantageux que le colaminage;

– il supporte parfaitement bien une stérilisation à la vapeur d'eau, à 118°C environ, alors qu'un complexe PA 6/PP ou PP/PA 6/PE subit une dégradation importante à cette température.

Le matériau PA 11/PP se compare avantageusement au polypropylène (PP) pour ce qui est des techniques de soudage: la tête de soudure de l'appareil choisi peut être portée à une température suffisant à faire fondre le film PP (F. environ 158°C) sans pour autant modifier le film de polyamide PA11 (F.>178°C) qui fait alors office de feuille de protection.

Comme indiqué précédemment, le matériau du sachet selon l'invention est obtenu par coextrusion de polypropylène, du liant polyoléfinique choisi et de polyamide (PA 11), c'est-à-dire directement à partir du granulé correspondant, sans passer par la préparation préalable de feuilles. Dans un tel but, on applique avantageusement les techniques du soufflage ou du film/gaine, permettant la réalisation de films PA 11 ou FF simples aussi bien que doubles.

A l'aide de ces techniques, on peut obtenir toutes les variantes souhaitées dont seules quelques-unes sont citées ci-après, à titre d'exemple (films simples - Fig. 1) :

| polyamide (PA 11) | / | liant | / | polypropylène (PP) |
|---|---|---|---|---|
| 30 | / | 10 | / | 65 |
| 30 | / | 10 | / | 75 |
| 30 | / | 10 | / | 90 |
| 30 | / | 10 | / | 120 |
| 40 | / | 10 | / | 110 |
| 60 | / | 10 | / | 120 |

Autres variantes (films doubles) :

```
polyamide  (PA 11)      /      liant    /    polypropylène (PP)

    15/15               /        10     /        45/45
    20/20               /        10     /        55/55
```

L'emploi de films PA 11, respectivement PP doubles permet d'augmenter nettement la résistance mécanique des films constituant le matériau multicouche du sachet selon l'invention. On observera, en outre, qu'étant donné la compatibilité des polymères en jeu, la présence de liant n'est pas nécessaire pour la réalisation des films doubles PA 11/PA 11 et PP/PP. Bien entendu, en fonction des effets recherchés, on peut combiner dans un tel matériau l'emploi de films simples et doubles pour obtenir, par exemple, un matériau du type PA 11/ PA 11 / PP ou PA 11 / PP / PP.

Autres variantes (films simples - Fig. 2)

```
polypropylène/liant/polyamide/liant/polypropylène

    30        / 10 /     25    / 10 /      50
```

Comme indiqué plus haut, cette énumération n'est pas exhaustive.

Les chiffres ci-dessus représentent des épaisseurs en micromètres. Toutes les variations d'épaisseur sont autorisées, en fonction des effets recherchés, les valeurs minimum étant fixées par la résistance mécanique du film considéré. Pour les usages retenus, le film de polyamide (PA 11) a de préférence une épaisseur d'au moins 20 micromètres.

Dans sa variante préférentielle, c'est-à-dire sous forme de matériau binaire (Fig. 1), les films 1 de polyamide (PA 11) constituent la couche externe du sachet selon l'invention et les films 2 de polypropylène (PP) en constituent la couche interne. Dans un tel complexe (PA 11/PP en termes techniques) le film de polyamide est protégé du contact de la solution aqueuse contenue dans le sachet par le film de polypropylène et la solution aqueuse en question est efficacement protégée des gaz que $O_2/CO_2$ par la barrière que constitue le film de polyamide.

Pour ce qui est de la fabrication du sachet souple proprement dit, on dispose l'une contre l'autre deux feuilles du matériau défini ci-dessus et la soudure s'effectue au niveau des deux films de polypropylène ainsi assemblés, avec tous les avantages mentionnés plus haut (voir détail sur Fig. 4).

Les avantages d'un tel matériau, dans le but assigné ci-dessus, sont fort nombreux et l'on peut encore citer la biocompatibilité avec les solutions de glucides, lipides ou les acides aminés, l'étanchéité à la vapeur d'eau (pertes en eau réduites), la stabilité chimique lors de la stérilisation (faibles variations du pH) et l'adaptation aisée aux techniques du soudage, que ce soit le soudage thermique ou le soudage par ultra-sons. De plus, le film externe de polyamide se prête bien aux techniques d'impression.

## Revendications

1. Sachet souple étanche à usage médical pour solutions stériles, en particulier sachet souple pour perfusions, caractérisé en ce qu'il est fait de deux feuilles soudées de matériau multicouche en feuille comprenant un film de polyamide de l'acide 11-amino-undécanoïque (1) lié par l'une au moins de ses faces à un film de polypropylène (2) au moyen d'un film de polyoléfine (3), les films de polypropylène (2) formant la paroi interne du sachet souple étanche.

2. Sachet souple étanche selon la revendication 1, caractérisé en ce qu'un film de polypropylène (2,2') est lié à chacune des faces du film de polyamide de l'acide 11-amino-undécanoïque (1).

3. Sachet souple étanche selon l'une des revendications 1 ou 2, caractérisé en ce que le polypropylène constituant le film (2,2') est un homopolymère de propylène.

4. Sachet souple étanche selon l'une des revendications 1 ou 2, caractérisé en ce que le polypropylène constituant le film (2,2') est un copolymère de propylène et d'éthylène.

5. Sachet souple étanche selon l'une des revendications 1 à 4, caractérisé en ce que le film de polyamide de l'acide 11-amino-undécanoïque (1), respectivement de polypropylène (2) est un film simple ou double.

6. Procédé de fabrication d'un sachet souple étanche selon l'une des revendications 1 à 5, caractérisé en ce qu'on commence par fabriquer un matériau multicouche en feuille par coextrusion de polyamide de l'acide 11-amino-undécanoïque, du liant polyoléfinique et de polypropylène puis on dispose deux feuilles du matériau multicouche l'une contre l'autre, les deux feuilles étant en contact par leur film de polypropylène, et on effectue la soudure au niveau des deux films de polypropylène ainsi assemblés.

## Patentansprüche

1. Flexibler, dichter Beutel zum medizinischen Gebrauch für sterile Lösungen, insbesondere flexibler Beutel für Perfusionen, dadurch gekennzeichnet, dass er aus zwei zusammengeschweissten Folien aus mehrschichtigem Folien-Material gemacht ist, welches eine Folie von Polyamid aus 11-Amino-Undecan-Säure (1) umfasst, die mit wenigstens einer ihrer Seiten, mit Hilfe einer Schicht Polyolefin (3) mit einer Folie aus Polypropylen (2) verbunden ist, wobei die Polypropylen-Folien (2) die Innenwand des dichten, flexiblen Beutels bilden.

2. Flexibler, dichter Beutel nach Anspruch 1, dadurch gekennzeichnet, dass eine Folie aus Polypropylen (2, 2') auf jeder ihrer Seite mit der Folie des Polyamid aus 11-Amino-Undecan-Säure (1) verbunden ist.

3. Flexibler, dichter Beutel nach einem der Ansprüche 1 oder 2, dadurch gekennzeichnet, dass das Polypropylen, welches die Folie (2, 2') bildet, ein Homopolymere-Propylen ist.

4. Flexibler, dichter Beutel nach einem der Ansprüche 1 oder 2, dadurch gekennzeichnet, dass das Polypropylen, welches die Folie (2, 2') bildet ein Kopolymerisat von Propylen und Ethylen ist.

5. Flexibler, dichter Beutel nach einem der Ansprüche 1 bis 4, dadurch gekennzeichnet, dass die Folie aus 11-Amino-Undecan-Säure (1), beziehungsweise aus Polypropylen (2), eine einfache oder eine doppelte Folie ist.

6. Verfahren zum Herstellen eines flexiblen, dichten Beutels nach einem der Ansprüche 1 bis 5, dadurch gekennzeichnet, dass man damit beginnt, durch gleichzeitige Extrusion einer mehrschichtigen Folie aus 11-Amino-Undecan-Säure (1), dem polyolefinen Bindemittel und Polypropylen herzustellen, dass man dann zwei der mehrschichtigen Folien aufeinander legt, sodass sich die beiden Folien mit ihrer Schicht aus Polypropylen berühren, und dass man die beiden so zusammengefügten Schichten aus Polypropylen verschweisst.

## Claims

1. An impermeable flexible bag for sterile solutions for medical use, in particular a flexible bag for perfusions, characterized in that it is made of two welded sheets of a multilayer sheet material comprising a 11-aminoundecanoic acid polyamide film (1) bonded by at least one of its faces to a polypropylene film (2), by means of a polyolefin film (3), the polypropylene films (2) forming the inner wall of the impermeable flexible bag.

2. An impermeable flexible bag according to claim 1, characterized in that a polypropylene film (2,2') is bonded to each one of the faces of the 11-aminoundecanoic acid polyamide film (1).

3. An impermeable flexible bag according to one of claims 1 or 2, characterized in that the polypropylene forming the film (2,2') is a homopolymer of propylene.

4.  An impermeable flexible bag according to one of claims 1 or 2, characterized in that the polypropylene forming the film (2,2') is a copolymer of propylene and ethylene.

5.  An impermeable flexible bag according to one of claims 1 to 4, characterized in that the 11-aminoundecanoic acid polyamide film (1), respectively the polypropylene film (2) is a simple or a double film.

6.  A process for manufacturing an impermeable flexible bag according to one of claims 1 to 5, characterized in that firstly a multilayer sheet material is produced by the co-extrusion of the 11-aminoundecanoic acid polyamide, of the polyolefinic bonding agent and of the polypropylene, then two sheets of the multilayer material are disposed one against the other, the two sheets being in contact by their polypropylene film, and the welding is carried out at the two polypropylene films thus assembled.

# FIG.1

# FIG.2

# FIG.3

# FIG.4